# EUROPEAN PATENT APPLICATION

(11) **EP 4 120 077 A1**
(43) Date of publication of application: **18.01.2023**
(21) Application number: 20928841.4
(22) Date of filing: 31.03.2020
(51) Int. Cl.: G06F 9/48, G06F 9/50

(54) **METHOD FOR SCHEDULING HARDWARE ACCELERATOR, AND TASK SCHEDULER**

(71) Applicant: Huawei Technologies Co., Ltd., Shenzhen, Guangdong 518129, (CN)
(72) Inventor: HUANG, Weichao, Shenzhen, Guangdong 518129 (CN); XIAO, Long, Shenzhen, Guangdong 518129 (CN)
(74) Representative: Epping - Hermann - Fischer
(86) International application number: PCT/CN2020/082395
(87) International publication number: WO 2021/195949

(57) **Abstract**

A method for scheduling a hardware accelerator and a task scheduler are disclosed. A main idea is as follows: A task scheduler is connected between a CPU and each hardware accelerator. The task scheduler first obtains a target task (for example, obtains the target task from a memory), and obtains a dependency relationship between the target task and an associated task. When it is determined, based on the dependency relationship, that a first associated task (for example, a prerequisite for executing the target task is that both a task 1 and a task 2 are executed) in the associated task has been executed, it indicates that the target task meets an execution condition, and the task scheduler schedules related hardware accelerators (one or more) to execute the target task. Based on a dependency relationship between tasks, the task scheduler schedules, through hardware scheduling, each hardware accelerator to execute each task, and delivery of each task is performed through direct hardware access. This shortens delay of task delivery, and indirectly improves processing performance of a system. The scheduling method may be applied to a control system in an MDC scenario.

## Description

### TECHNICAL FIELD

This application relates to the field of network communication technologies, and in particular, to a method for scheduling a hardware accelerator and a task scheduler.

### BACKGROUND

A hardware accelerator (hardware accelerator, HAC) is a hardware module that uses a logic language to implement some specific functions. Because data can be concurrently processed, the hardware accelerators have greater advantages than software implementation in processing capability and delay. Currently, in some control systems, for example, an autonomous driving multi-domain controller (Multi-Domain Controller, MDC, also referred to as an intelligent driving domain controller), corresponding accelerators used by a system on chip (System on Chip, SoC) to process different information flow tasks need to be scheduled to work together to complete corresponding tasks. Each task is processed based on a data frame. Each data frame is parallelly or serially processed by a plurality of HACs.

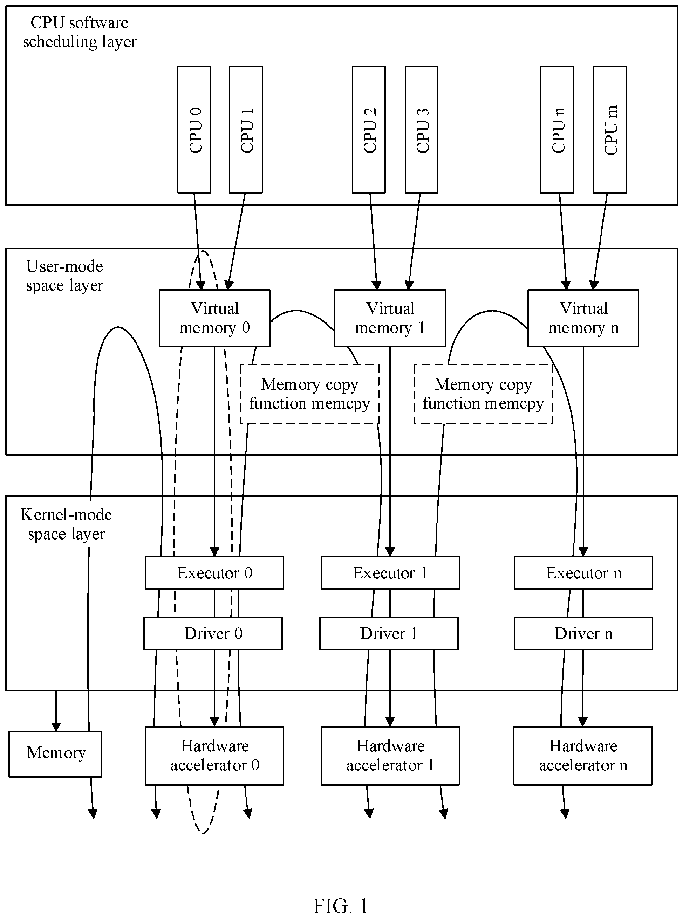

Currently, the HAC is generally managed and scheduled by software, and HACs are scheduled by using software. Each HAC may be scheduled by one or more pieces of software. When a task needs to be processed, software sends a task request to a corresponding HAC. The HAC returns a task completion response after processing is completed. As shown in FIG. 1, in a control system in an MDC scenario, tasks are performed by scheduling the HACs by software at a CPU software scheduling layer, a user-mode space layer, a kernel-mode space layer, and the HACs from top to bottom. A process of scheduling a task by software is specifically as follows: A CPU receives data (that is, the foregoing task) transmitted by a previous level, and a hardware accelerator 0 needs to perform data processing. In this case, address space needs to be created at the user-mode space layer to copy the data in a virtual memory 0, an executor 0 (Executor) that corresponds to the hardware accelerator 0 and that is at the kernel-mode space layer is called, and then the hardware accelerator 0 is called to run the data to complete processing of the corresponding task. After executing the task, the hardware accelerator 0 generates a message response (for example, generates an interrupt or a status register), sequentially reports the message response to the user-mode space layer through a driver 0 (Driver) and the executor 0 at the kernel-mode space layer, and finally reports the message response to the CPU for processing. After the foregoing data is processed by the hardware accelerator 0, if a hardware accelerator 1 further needs to continue to perform data processing, data output after being processed by the hardware accelerator 0 further needs to be copied, and then the hardware accelerator 1 continues to perform processing according to the foregoing described process until the data is finally reported to the CPU. If a plurality of tasks need to be processed and the tasks depend on each other (for example, a task 2 can be processed only after a task 1 is processed), each task needs to be processed according to the preceding steps. In addition, the task 2 can be processed according to the preceding steps only after the task 1 is processed according to the preceding steps.

In the foregoing method for scheduling a hardware accelerator, a kernel-mode driver and an executor are required in a process in which tasks are delivered level by level and a process in which the tasks are reported level by level after being processed, and then the tasks reach a user-mode space layer, and finally are reported to a CPU for processing. This process takes a long time. If a plurality of tasks need to be processed and the tasks depend on each other, the tasks need to be processed according to the preceding steps in sequence. During this period, waiting time is long and CPU resources are occupied.

### SUMMARY

Embodiments of this application provide a method for scheduling a hardware accelerator and a task scheduler. A task scheduler is connected between a CPU and each hardware accelerator. The task scheduler is configured to schedule, through hardware scheduling and based on a dependency relationship between tasks, an HAC to execute each task. Delivery of each task and reporting after task execution are both performed through direct hardware access. This shortens delay of task delivery and reporting after the task is processed, and indirectly improves processing performance of a system.

In view of this, embodiments of this application provide the following technical solutions.

According to a first aspect, this application first provides a method for scheduling a hardware accelerator. The method includes: A task scheduler first obtains a target task, for example, obtains the target task from a memory (for example, a DDR). The target task is a task to be executed in a task set. After obtaining the target task, the task scheduler may determine, based on a dependency relationship, a first associated task associated with the target task. The first associated task is a task that needs to be executed based on the dependency relationship before the target task is executed. The first associated task may be one task in the task set, or may be a plurality of tasks in the task set. A quantity of first associated tasks is specifically determined based on the dependency relationship. When there are a plurality of first associated tasks, the dependency relationship further includes an execution sequence of the plurality of first associated tasks. After the task scheduler determines, based on the dependency relationship, the first associated task associated with the target task, and further determines that the first associated task has been executed, the task scheduler determines at least one hardware accelerator related to execution of the target task, and schedules the at least one hardware accelerator to execute the target task.

In the foregoing implementation of this application, the task scheduler first obtains the target task (for example, obtains the target task from the memory), and obtains a dependency relationship between the target task and an associated task. When it is determined, based on the dependency relationship, that the first associated task (for example, a prerequisite for executing the target task is that a task 1, a task 2 and the like are all successfully executed) in the associated task has been successfully executed, it indicates that the target task meets an execution condition. In this case, the task scheduler schedules the hardware accelerator (may be one or more) related to execution of the target task to execute the target task. In this embodiment of this application, the task scheduler is connected between a CPU and each hardware accelerator. The task scheduler is configured to schedule, through hardware scheduling and based on a dependency relationship between tasks, the HAC to execute each task. Delivery of each task is performed through direct hardware access. This shortens delay of task delivery, and indirectly improves processing performance of a system.

With reference to the first aspect of embodiments of this application, in a first implementation of the first aspect of embodiments of this application, there may be one or more hardware accelerators that execute the target task. When there are a plurality of hardware accelerators that execute the target task, the plurality of hardware accelerators execute the target task in sequence. It should be noted that, in some implementations of this application, that the plurality of hardware accelerators execute the target task in sequence may include a case in which the plurality of hardware accelerators concurrently execute the target task. For example, if the task scheduler determines, after obtaining the target task, that the target task needs to be separately executed by a hardware accelerator 1, a hardware accelerator 2, and a hardware accelerator 3, the target task may be concurrently executed by the hardware accelerators 1 to 3, and the hardware accelerators 1 to 3 do not conflict with each other.

In the foregoing implementation of this application, when there are a plurality of hardware accelerators related to execution of the target task, how the plurality of hardware accelerators work together to execute the target task is described. This is operable.

With reference to the first aspect and the first implementation of the first aspect of embodiments of this application, in a second implementation of the first aspect of embodiments of this application, after the task scheduler schedules the at least one hardware accelerator to execute the target task, the task scheduler further instructs the hardware accelerator to store (for example, store data in the memory DDR) data generated after the target task is executed, so that the data generated after the target task is executed can be directly invoked by another hardware accelerator when subsequently required.

In the foregoing implementations of this application, each hardware accelerator stores processed data (for example, stores the processed data in the memory) after processing the target task. In this way, when another hardware accelerator needs to further process the processed data, the processed data does not need to be copied, and can be directly invoked. This reduces a data processing amount, reduces time, and indirectly improves system performance.

With reference to the first aspect or the first to the second implementations of the first aspect of embodiments of this application, in a third implementation of the first aspect of embodiments of this application, each hardware accelerator may execute one or more tasks. In this case, each hardware accelerator corresponds to one execution queue, and tasks to be executed by the hardware accelerator are stored in each execution queue in sequence. When there are a plurality of hardware accelerators that execute the target task, an identifier of the target task is stored in the execution queue corresponding to each hardware accelerator for the target task.

In the foregoing implementation of this application, the hardware accelerator identifies, based on identifiers of tasks arranged in the corresponding execution queue, a sequence in which each task is processed. This is flexible.

With reference to the third implementation of the first aspect of embodiments of this application, in a fourth implementation of the first aspect of embodiments of this application, after scheduling the hardware accelerator to execute the corresponding target task, the task scheduler receives an indication message returned by the corresponding hardware accelerator that executes the target task. The indication message indicates that the hardware accelerator has executed the target task. In this case, the task scheduler may delete the identifier of the target task from the execution queue corresponding to the hardware accelerator.

In the foregoing implementation of this application, as described above, after the task is executed, the identifier of the corresponding task is deleted from the execution queue. The execution queue is dynamically maintained. This is flexible.

With reference to the first aspect or the first to the fourth implementations of the first aspect of embodiments of this application, in a fifth implementation of the first aspect of embodiments of this application, each task in the task set is processed in a processing manner similar to that of the target task. After each task in the task set is executed, the task scheduler obtains all data after each task is executed, and stores the data (for example, stores the data in the memory). All the tasks in the task set form a scheduled task. An original scheduled task is completed only after all the tasks in the task set are executed. One scheduled task is a specific implementation process in which a data flow (which may be referred to as raw data) obtained by a terminal device by using a sensor (for example, a camera) is processed by a series of related hardware accelerators to obtain output data (for example, data used to sense an obstacle and data used to be sent to another device) with a specified function.

In the foregoing implementation of this application, as described above, in an MDC scenario, one scheduled task is completed only after all tasks in one task set are processed. This is practical.

With reference to the fifth implementation of the first aspect of embodiments of this application, in a sixth implementation of the first aspect of embodiments of this application, a task set includes a plurality of tasks, and data that forms the plurality of tasks may be obtained through a plurality of channels, including but not limited to: The terminal device (for example, a vehicle) obtains the data by using an installed camera device (for example, a camera installed on the vehicle). In this case, the obtained data that forms the plurality of tasks is image data or video data. After the terminal device obtains the data by using the camera, the data is divided into tasks (for example, divided in a manner of a data frame), and the divided tasks form the task set.

In the foregoing implementation of this application, a channel for obtaining the data that forms the task set is described. This is universally applicable.

With reference to the fifth to the sixth implementations of the first aspect of embodiments of this application, in a seventh implementation of the first aspect of embodiments of this application, one scheduled task may be specifically that an AI module (for example, an AI processor) performs computing to obtain feedback data. The feedback data may be used to guide an operation of a user on the terminal device (for example, the vehicle). In this embodiment of this application, the AI module is also a type of hardware accelerator.

In the foregoing embodiment of this application, as described above, the data obtained after the scheduled task is executed may be feedback data calculated by the AI module, and the feedback data may be further used to guide the operation of the user on the terminal device. This is practical.

With reference to the seventh implementation of the first aspect of embodiments of this application, in an eighth implementation of the first aspect of embodiments of this application, when the terminal device is a vehicle, in some application scenarios, the feedback data may be data used to sense a lane line and/or a stop line, and is used to guide a vehicle owner to drive in a specified lane or stop in a specified parking area. Alternatively, the feedback data may be data used to sense a safety area, and is used to guide the vehicle owner to keep this vehicle at a safe distance from another vehicle. Alternatively, the feedback data may be data used to sense an obstacle (for example, a distance from the obstacle), and is used to guide the vehicle owner to take safety measures (for example, stop or turn) in advance. A type and a function of the feedback data are not limited herein. Corresponding feedback data may be obtained based on an actual application scenario. Therefore, the vehicle owner is guided to operate the vehicle based on the corresponding feedback data, thereby improving driving safety and driving performance.

In the foregoing embodiment of this application, an application scenario of the feedback data is specifically described. This is diversified.

A second aspect of embodiments of this application provides a task scheduler. The task scheduler has a function of implementing the method according to any one of the first aspect or the possible implementations of the first aspect. The function may be implemented by hardware, or may be implemented by hardware executing corresponding software. The hardware or the software includes one or more modules corresponding to the foregoing function.

A third aspect of embodiments of this application provides a control system. The control system may specifically include but is not limited to a task scheduler and a hardware accelerator. The task scheduler is configured to: obtain a target task (for example, obtain the target task from a memory), and determine, based on a dependency relationship, a first associated task associated with the target task, where the dependency relationship indicates an execution sequence of tasks in a task set, and the target task is a task in the task set; and when it is determined that the first associated task has been executed, schedule the hardware accelerator to execute the target task. The hardware accelerator is configured to execute the target task.

With reference to the third aspect of embodiments of this application, in a first implementation of the third aspect of embodiments of this application, the task scheduler may include but is not limited to: at least one execution queue. An identifier of the target task is stored in each execution queue. The at least one hardware accelerator is configured to execute the target task by using the identifier of the target task stored in the at least one execution queue. Each hardware accelerator corresponds to one execution queue.

With reference to the third aspect of embodiments of this application and the first implementation of the third aspect of embodiments of this application, in a second implementation of the third aspect of embodiments of this application, the task scheduler is further configured to: store data obtained after each task in the task set is executed. All tasks in the task set form a scheduled task.

With reference to the second implementation of the third aspect of embodiments of this application, in a third implementation of the third aspect of embodiments of this application, data that forms the tasks in the task set is obtained by a terminal device by using a camera device installed on the terminal device. The control system may be located on the terminal device (for example, a camera on a vehicle obtains image data and transmits the image data to the control system on the vehicle). Alternatively, the control system may not be located on the terminal device (for example, a camera of a mobile phone of a user obtains image data, and transmits the image data to a vehicle that has a communication connection to the mobile phone, and the control system is located on the vehicle).

With reference to the second to the third implementations of the third aspect of embodiments of this application, in a fourth implementation of the third aspect of embodiments of this application, data obtained after each task in the task set is executed may be feedback data calculated by an AI module (for example, an AI processor). The feedback data is used to guide an operation on the terminal device, and the AI module is also a type of hardware accelerator.

With reference to the third aspect or the first to the fourth implementations of the third aspect of embodiments of this application, in a fifth implementation of the third aspect of embodiments of this application, the task scheduler may further include a scheduling engine and an executor. The scheduling engine is configured to invoke the target task and the dependency relationship from the memory. The executor is configured to provide an interface to the hardware accelerator. The execution queue is used to buffer the identifiers of the target task in sequence. Specifically, the task scheduler including the scheduling engine, the executor, and the execution queue has a function of implementing the method according to any one of the first aspect or the possible implementations of the first aspect.

A fourth aspect of embodiments of this application provides a task scheduler. The task scheduler may include a memory, a processor, and a bus system. The memory is configured to store a program. The processor is configured to invoke the program stored in the memory, to perform the method according to any one of the first aspect or the possible implementations of the first aspect of embodiments of this application.

A fifth aspect of this application provides a computer-readable storage medium. The computer-readable storage medium stores instructions. When the instructions are run on a computer, the computer is enabled to perform the method according to any one of the first aspect or the possible implementations of the first aspect.

A sixth aspect of embodiments of this application provides a computer program. When the computer program runs on a computer, the computer is enabled to perform the method according to any one of the first aspect or the possible implementations of the first aspect.

### BRIEF DESCRIPTION OF DRAWINGS

FIG. 1 is a schematic diagram of scheduling an HAC by software for a task;
FIG. 2 is a schematic diagram of a control system according to an embodiment of this application;
FIG. 3 is a schematic diagram of a method for scheduling a hardware accelerator according to an embodiment of this application;
FIG. 4 is a schematic diagram of a relationship between each hardware accelerator and an execution queue according to an embodiment of this application;
FIG. 5 is a schematic diagram of an association relationship between tasks in a task set according to an embodiment of this application;
FIG. 6 is a schematic diagram of an association relationship between a task and an event after an event concept is introduced according to an embodiment of this application;
FIG. 7 is a schematic diagram in which a dependency relationship between tasks is a two-dimensional chart according to an embodiment of this application;
FIG. 8 is a schematic diagram of a structure of a current control system in an MDC scenario;
FIG. 9 is a schematic diagram of a structure of a control system in an MDC scenario according to an embodiment of this application;
FIG. 10 is a schematic diagram of describing a scheduled task in an MDC scenario according to an embodiment of this application;
FIG. 11 is a schematic diagram of an actual application scenario of an MDC according to an embodiment of this application;
FIG. 12 is a schematic diagram of a task scheduler according to an embodiment of this application; and
FIG. 13 is another schematic diagram of a task scheduler according to an embodiment of this application.

### DESCRIPTION OF EMBODIMENTS

Embodiments of this application provide a method for scheduling a hardware accelerator and a task scheduler. A task scheduler is connected between a CPU and each hardware accelerator. The task scheduler is configured to schedule, through hardware scheduling and based on a dependency relationship between tasks, an HAC to execute each task. Delivery of each task and reporting after task execution are both performed through direct hardware access. This shortens delay of task delivery and reporting after the task is processed, and indirectly improves processing performance of a system.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In this specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

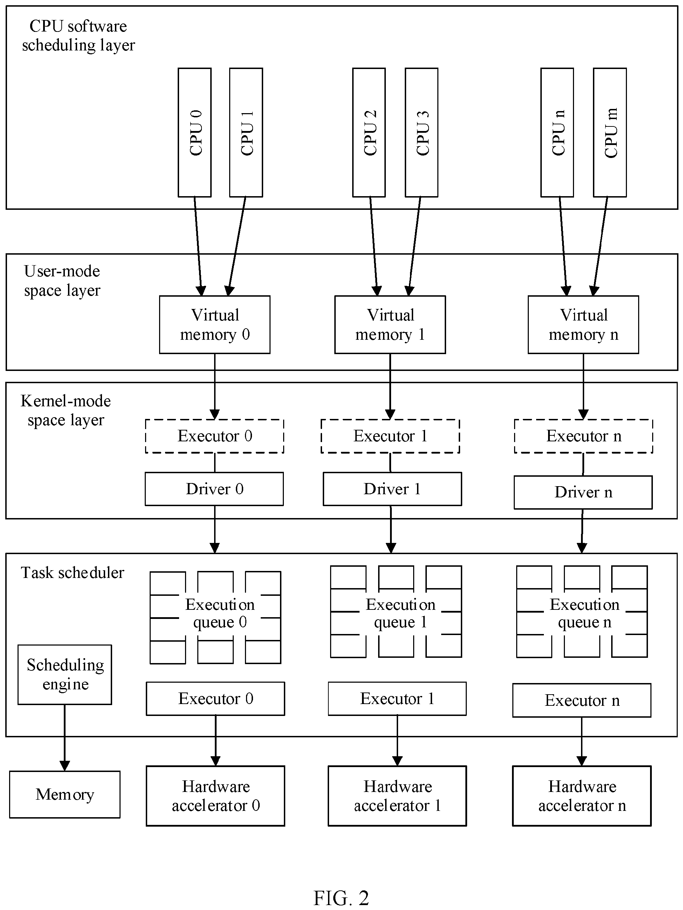

Before embodiments of this application are described, a location of the task scheduler described in this application in a control system is first described. As shown in FIG. 2, the task scheduler is located between a CPU and each hardware accelerator. Each hardware accelerator has an interface corresponding to the task scheduler. The interface is provided by a task executor (which may be briefly referred to as an executor) on the task scheduler. The task scheduler may have a plurality of execution queues. Each execution queue corresponds to one hardware accelerator (in some embodiments, the execution queue may also exist in a memory or a corresponding hardware accelerator, which is not limited herein, and FIG. 2 is merely an example), and is used to store identifiers of tasks in an execution sequence. A task to be executed, data obtained after the task is executed, a dependency relationship between the tasks, and the like may all be stored in the memory DDR (in some implementations, may also be stored in another position, for example, directly stored in a storage unit of the task scheduler, which is not limited herein, and FIG. 2 is merely an example). When related data is stored in the memory, after the task scheduler schedules at least one hardware accelerator to execute the target task, the task scheduler may instruct the hardware accelerator to store data generated after the target task is executed. In this way, the data generated after the target task is executed may be directly invoked by another hardware accelerator when subsequently required, and does not need to be copied. This reduces a data processing amount, reduces time, and indirectly improves system performance. The task scheduler may exchange information with the memory and each hardware accelerator (for example, receive an indication message returned by the hardware accelerator, query the related data in the memory, and send an instruction to the hardware accelerator) by using a scheduling engine on the task scheduler. For example, data collected from a camera is stored in the memory. The data (that is, the target task) needs to be processed by a hardware accelerator 0 and a hardware accelerator 1. The task scheduler obtains, from the memory, the foregoing data collected by the camera, and delivers an instruction to the hardware accelerator 0, to instruct the hardware accelerator 0 to process the data. After processing the data, the hardware accelerator 0 may notify the task scheduler by using a hardware signal cable, and store the processed data in the memory. Then, the task scheduler delivers an instruction to the hardware accelerator 1, to instruct the hardware accelerator 1 to invoke, from the memory, the foregoing data processed by the hardware accelerator 0 for further processing. After processing the data, the hardware accelerator 1 notifies the task scheduler, and stores the processed data in the memory again. In this embodiment of this application, both task delivery and reporting after the task is processed are performed through direct hardware access. This greatly reduces processing delay of task delivery and reporting after the task is processed, and indirectly improves processing performance of a chip. Because data is stored in the memory, data cache space may be shared, and repeated copying is not required. This reduces delay of data copying, and improves data processing performance.

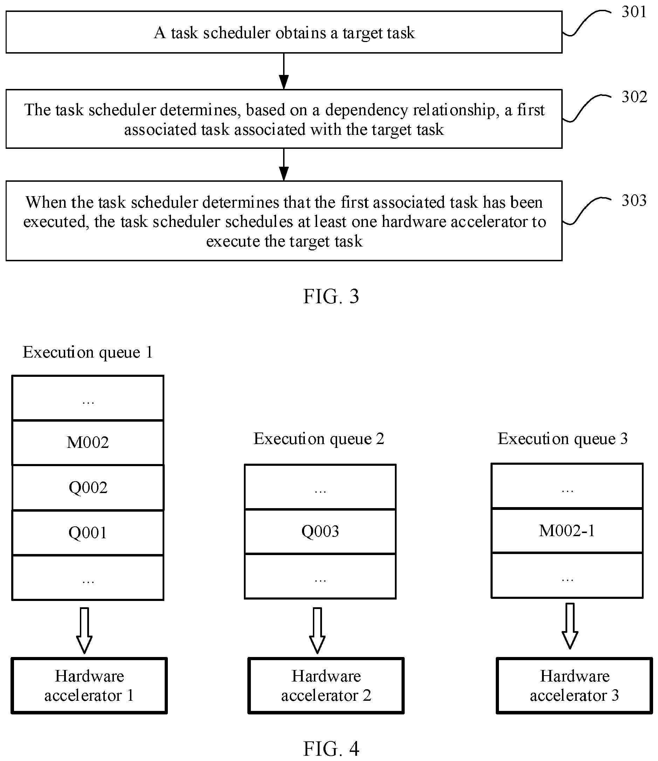

A method for scheduling a hardware accelerator provided in this embodiment of this application may be performed based on the control system in FIG. 2. In the method, a task scheduler directly implements pure hardware scheduling based on a dependency relationship between tasks, and does not need to occupy a CPU resource. For details, refer to FIG. 3.

301: The task scheduler obtains a target task.

The task scheduler first obtains the target task, for example, obtains the target task from a memory (for example, a DDR). The target task is a task to be executed in a task set. The task set includes a plurality of tasks. Data that forms the plurality of tasks may be obtained through a plurality of channels, including but not limited to: A terminal device (for example, a vehicle) obtains the data by using an installed camera device (for example, a camera installed on the vehicle). In this case, the obtained data that forms the plurality of tasks is image data or video data. After the terminal device obtains the data by using the camera, the data is divided into tasks (for example, divided in a manner of a data frame), and the divided tasks form the task set.

302: The task scheduler determines, based on a dependency relationship, a first associated task associated with the target task.

After obtaining the target task, the task scheduler may determine, based on the dependency relationship, the first associated task associated with the target task. The first associated task is a task that needs to be executed based on the dependency relationship before the target task is executed. The first associated task may be one task in the task set, or may be a plurality of tasks in the task set. A quantity of first associated tasks is specifically determined based on the dependency relationship. In addition, when there are a plurality of first associated tasks, the dependency relationship further includes an execution sequence of the plurality of first associated tasks. For example, when there are two first associated tasks, which are respectively a task 1 and a task 2, a sequence of executing the task 1 and the task 2 based on the dependency relationship is as follows: The task 1 is executed before the task 2. When both the task 1 and the task 2 are executed, it is determined that the target task meets an execution condition. It should be noted that the sequence described in this embodiment of this application may further include simultaneous execution. The foregoing example is still used as an example. If the task 1 and the task 2 need to be executed at the same time based on the dependency relationship, after the task 1 and the task 2 are executed at the same time and the two tasks are both executed, it is determined that the target task meets the execution condition.

303: When the task scheduler determines that the first associated task has been executed, the task scheduler schedules at least one hardware accelerator to execute the target task.

After the task scheduler determines, based on the dependency relationship, the first associated task associated with the target task, and further determines that the first associated task has been executed, the task scheduler determines at least one hardware accelerator related to execution of the target task, and schedules the at least one hardware accelerator to execute the target task. It should be noted that there may be one or more hardware accelerators that execute the target task. When there are a plurality of hardware accelerators that execute the target task, the plurality of hardware accelerators execute the target task in sequence. For ease of understanding, the following uses an example for illustration. If the task scheduler determines, after obtaining the target task, that the target task needs to be executed by a hardware accelerator 1, a hardware accelerator 2, and a hardware accelerator 3, and an execution sequence is that the target task is first executed by the hardware accelerator 1, data 1 obtained through execution is executed by the hardware accelerator 2, and then data 2 obtained through execution is executed by the hardware accelerator 3, data 3 obtained through execution by the hardware accelerator 3 is data (the data 3 may be referred to as target data) generated after all the hardware accelerators 1 to 3 execute the target task.

It should be noted that, in some implementations of this application, that the plurality of hardware accelerators execute the target task in sequence may include a case in which the plurality of hardware accelerators concurrently execute the target task. The foregoing example is still used as an example. If the task scheduler determines, after obtaining the target task, that the target task needs to be separately executed by the hardware accelerator 1, the hardware accelerator 2, and the hardware accelerator 3, the target task may be concurrently executed by the hardware accelerators 1 to 3, and the hardware accelerators 1 to 3 do not conflict with each other.

It should be further noted that, in some implementations of this application, how the task scheduler determines information such as a quantity of hardware accelerators for executing the target task, a type of the hardware accelerator, and an execution sequence may also be recorded in the dependency relationship. In this way, the task scheduler can not only determine, from the dependency relationship, the first associated task associated with the target task, but also determine, based on the dependency relationship, the hardware accelerator for executing the target task.

It should be further noted that, in some implementations of this application, after the task scheduler schedules the at least one hardware accelerator to execute the target task, the task scheduler further instructs the hardware accelerator to store data (for example, store the data in the memory DDR) generated after the target task is executed. In this way, the data generated after the target task is executed may be directly invoked by another hardware accelerator when subsequently required, and does not need to be copied. This reduces a data processing amount, reduces time, and indirectly improves system performance. For ease of understanding, the foregoing example is still used as an example for illustration. If the task scheduler determines, after obtaining the target task, that the target task needs to be executed by the hardware accelerator 1, the hardware accelerator 2, and the hardware accelerator 3 in sequence, and the execution sequence is that the target task is first executed by the hardware accelerator 1, the data 1 obtained through execution is executed by the hardware accelerator 2, and then the data 2 obtained through execution is executed by the hardware accelerator 3, the data 3 is obtained through execution by the hardware accelerator 3. In this case, the task scheduler instructs the hardware accelerator 1 to store the data 1 (for example, store the data 1 in the memory DDR) obtained after the target task is executed, and then the task scheduler instructs the hardware accelerator 2 to invoke the data 1 from the memory to continue execution. The task scheduler further instructs the hardware accelerator 2 to store the data 2 (for example, still store the data 2 in the memory DDR) obtained after the data 1 is executed. Finally, the task scheduler instructs the hardware accelerator 3 to invoke the data 2 from the memory to continue execution, and the task scheduler further instructs the hardware accelerator 3 to store the data 3 obtained after the data 2 is executed. It should be noted that, to distinguish between hardware accelerators that execute the target task each time, an original identifier of the target task may carry corresponding information about hardware accelerators that execute the target task (both the original identifier and an original identifier that carries the information may be referred to as identifiers of the target task), or the information about hardware accelerators that execute the target task may be separately stored. This is not specifically limited herein. An example is used for illustration. If the target task is sequentially executed by the hardware accelerators 1 to 3, and it is assumed that the identifier of the target task is M002, an identifier M002-1 may be used to indicate that the obtained data 1 is data obtained after the target task M002 is executed by the hardware accelerator 1. Similarly, M002-1-2 may be used to indicate that the obtained data 2 is obtained after the target task is sequentially executed by the hardware accelerator 1 and the hardware accelerator 2. An identifier M002-1-2-3 is used to indicate that the obtained data 3 is obtained after the target task is sequentially executed by the hardware accelerators 1 to 3. If the target task is concurrently executed by the hardware accelerators 1 to 3, similarly, identifiers M002-1, M002-2, and M002-3 may be used to respectively indicate that the obtained data is obtained after the target task is separately executed by the hardware accelerator 1, the hardware accelerator 2, and the hardware accelerator 3.

It should be noted that, in some implementations of this application, each hardware accelerator may execute one or more tasks. In this case, each hardware accelerator corresponds to one execution queue, and tasks to be executed by the hardware accelerator are stored in each execution queue in sequence. When there are a plurality of hardware accelerators that execute the target task, the identifier (which may be the original identifier of the target task, or may be a corresponding identifier after the target task is executed by a hardware accelerator) of the target task is stored in the execution queue corresponding to each hardware accelerator for the target task. This is not limited herein. For ease of understanding, an example is used herein for illustration. As shown in FIG. 4, it is assumed that there are three first associated tasks associated with the target task: a task 1, a task 2, and a task 3, it is determined, based on a dependency relationship of the task 1 and a dependency relationship of the task 2, that both the task 1 and the task 2 are executed by the hardware accelerator 1, and the hardware accelerator 1 needs to first execute the task 1 and then execute the task 2, it is determined, based on a dependency relationship of the target task, that the target task is also sequentially executed by the hardware accelerator 1 and the hardware accelerator 3, and it is determined, based on a dependency relationship of the task 3, that the task 3 is executed by the hardware accelerator 2. In this case, an identifier Q001 of the task 1, an identifier Q002 of the task 2, and the identifier M002 of the target task are sequentially arranged in an execution queue 1 corresponding to the hardware accelerator 1 (it is assumed that neither the task 1 nor the task 2 is executed). An identifier Q003 of the task 3 is stored in an execution queue 2 corresponding to the hardware accelerator 2 (it is assumed that the task 3 has not been executed). The identifier M002-1 of the data obtained after the target task is executed by the hardware accelerator 1 is stored in an execution queue 3 corresponding to the hardware accelerator 3.

It should be noted that, as shown in FIG. 4, there is one execution queue corresponding to each hardware accelerator, and the execution queue stores identifiers of tasks that are in the task set and that are to be executed by the corresponding hardware accelerator. In some implementations of this application, if there are a plurality of task sets at the same time, for example, it is assumed that there are three task sets, each hardware accelerator corresponds to three execution queues. As shown in FIG. 2, three execution queues corresponding to one hardware accelerator respectively correspond to three task sets. If there are m task sets, there are m execution queues on each hardware accelerator.

It should be noted that, in some implementations of this application, the execution queue may be a storage area located in the task scheduler, or may be a storage area located in the memory, or may be a storage area which is correspondingly divided from each hardware accelerator. This is not specifically limited herein.

It should be further noted that, in some implementations of this application, after scheduling the hardware accelerator to execute the corresponding target task, the task scheduler receives an indication message returned by the corresponding hardware accelerator that executes the target task. The indication message indicates that the hardware accelerator has executed the target task. In this case, the task scheduler may delete the identifier of the target task from the execution queue corresponding to the hardware accelerator. For ease of understanding, FIG. 4 is still used as an example for illustration. After the task 1 is executed by the hardware accelerator 1, the hardware accelerator 1 returns an indication message to the task scheduler, to indicate that the task 1 is executed. In this case, the task scheduler deletes the identifier Q001 of the task 1 from the execution queue. Similarly, then, the task 2 is executed in the sequence shown in the execution queue 1. After the task 2 is executed by the hardware accelerator 1, the identifier Q002 of the task 2 is deleted from the execution queue, and then an original target task is executed in the sequence shown in the execution queue 1. After the target task is executed by the hardware accelerator 1, the identifier M002 of the target task is deleted from the execution queue. In addition, each time a task is executed, the hardware accelerator 1 stores data corresponding to the executed task (for example, stores the data in the memory DDR). After the target task is executed by the hardware accelerator 1, the obtained data 1 is stored. After the task 1, the task 2, and the task 3 are all executed, the task scheduler instructs the hardware accelerator 3 to execute the data 1 (a prerequisite is that there is no identifier of another task before M002-1 in the execution queue 3).

It should be noted that, in some implementations of this application, tasks that need to be first executed before the target task is executed and an execution sequence of these tasks (that is, the first associated tasks) may be determined based on the dependency relationship of the target task, a task (which may be referred to as a second associated task) that meets the execution condition after the target task is executed may be further determined from the dependency relationship. An example is used for illustration. It is assumed that the second associated task is a task m. If a prerequisite for executing the task m is that the target task has been executed, in a dependency relationship of the task m, the target task is the first associated task of the task m. When the task m is executed, the task m is processed as a new target task in the foregoing manner. Details are not described herein again. By analogy, each task in the task set has its own dependency relationship, and all tasks in the task set may be executed based on the dependency relationship of each task in the foregoing scheduling manner.

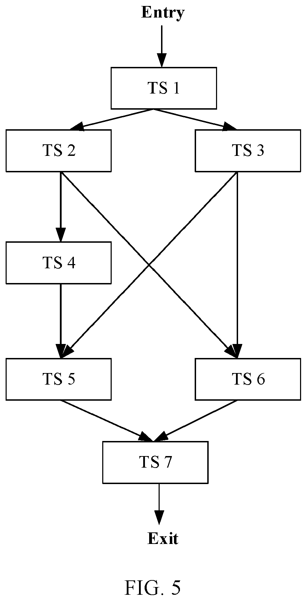

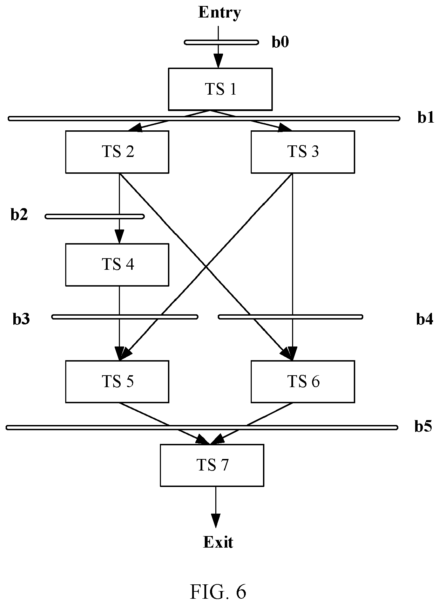

To better understand the foregoing solution, the following uses FIG. 5 as an example to describe a specific dependency relationship between the tasks in the task set. It is assumed that a task set includes seven tasks, which are respectively denoted as TS 1 to TS 7, and their execution sequence and dependency relationship are shown in FIG. 5. The entire task set is completed only after TS 7 is executed from TS 1. For better and clearer understanding, a concept of "event" is introduced. As shown in FIG. 6, b0 to b5 are six events. Therefore, a group of tasks TS 1 to TS 7 may also be referred to as an "event task group". For meanings expressed in FIG. 6, refer to the task description in Table 1 and the event description in Table 2.

**Table 1: Task description**

| Task ID | Entry event | Related event |
|---|---|---|
| TS 1 | The task TS 1 is an entry task and is triggered by the event b0. | After the task TS 1 is executed, the event b1 is triggered. |
| TS 2 | The task TS 2 is triggered by the event b1. | After the task TS 2 is executed, the events b2 and b4 are triggered. |
| TS 3 | The task TS 3 is triggered by the event b1, and the tasks TS 3 and TS 2 may be concurrently executed. | After the task TS 3 is executed, the events b3 and b4 are triggered. |
| TS 4 | The task TS 4 is triggered by the event b2. | After the task TS 4 is executed, the event b3 is triggered. |
| TS 5 | The task TS 5 is triggered by the event b3. | After the task TS 5 is executed, the event b5 is triggered. |
| TS 6 | The task TS 6 is triggered by the event b4. | After the task TS 6 is executed, the event b5 is triggered. |
| TS 7 | The task TS 7 is triggered by the event b5. | The task TS 7 is an exit task. After the task TS 7 is processed, the event task group is completed. |

**Table 2: Event description**

| Event ID | Dependency | List of tasks associated with an event |
|---|---|---|
| b0 | A start event of the event task group, which is triggered by software to start execution. | TS 1 |
| b1 | Depend only on completion of the task TS 1. | TS 2 and TS 3 |
| b2 | Depend only on completion of the task TS 2. | TS 4 |
| b3 | Depend on completion of the tasks TS 3 and TS 4. | TS 5 |
| b4 | Depend only on completion of the tasks TS 2 and TS 3. | TS 6 |
| b5 | Depend only on completion of the tasks TS 5 and TS 6. | TS 7 |

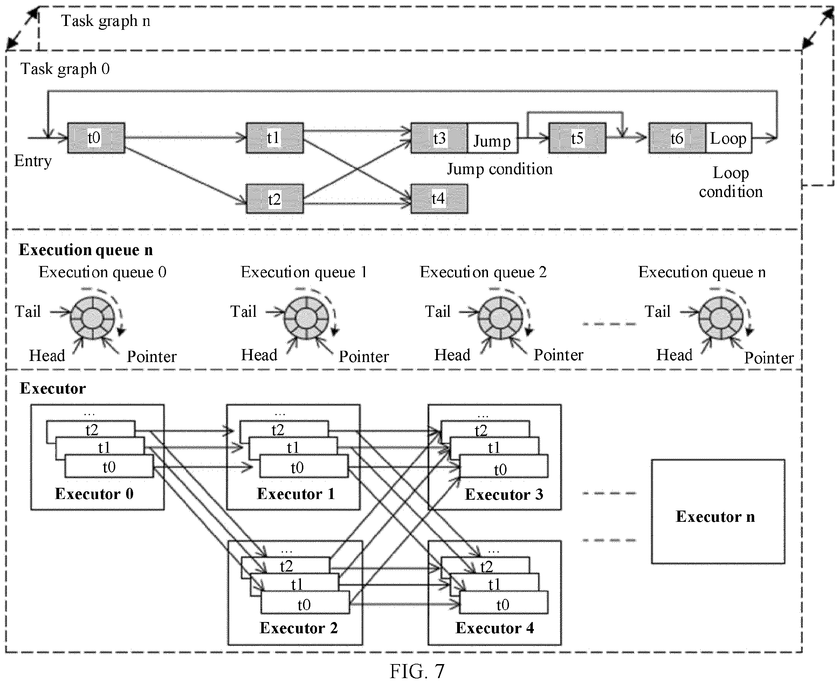

Based on the foregoing association relationship between the tasks, a dependency relationship between each task and another task may be obtained. It should be noted that each task may correspond to one dependency relationship, or association relationships between all tasks in the task set may form a dependency relationship (for example, a two-dimensional chart shown in FIG. 7). This is not limited herein.

In addition, an event-based task scheduling process may be specifically as follows: The software first triggers b0 to start and execute the task TS 1. After the task TS 1 is executed, the event b1 is triggered. The event b1 schedules TS 2 and TS 3 in a task list to be concurrently executed. After the task TS 2 is executed, the events b2 and b4 are notified. The event b2 schedules TS 4 in the task list to be executed. After the task TS 3 is executed, the events b3 and b4 are notified. If the event b4 meets a condition, TS 6 in the task list is scheduled to be executed. After the task TS 6 is executed, the event b5 is notified. If the task TS 4 is executed, the event b3 is notified. If the event b3 meets a condition, TS 5 in the task list is scheduled to be executed. If the event b5 meets a condition, TS 7 in the task list is scheduled to be executed. After the task TS 7 is executed, the task in the entire event task group is completed.

Based on the foregoing description, in some implementations of this application, the dependency relationship of each task may be stored in the memory in a manner of a two-dimensional chart. FIG. 7 shows a two-dimensional chart of one dependency relationship of each task in one task set, that is, a task graph 0 in FIG. 7. A task graph n represents a two-dimensional chart (not shown in detail in FIG. 7) of one dependency relationship of each task in an n^{th} task set. In FIG. 7, the task graph 0 shows that there are seven tasks in the task set, which are respectively t0 to t6. An upper part of the task graph 0 represents an execution sequence (indicated by an arrow) and an association relationship of the tasks t0 to t6. t4 is used as an example. A prerequisite for executing t4 is that both t1 and t2 have been executed. A middle part of the task graph 0 represents an arrangement sequence of identifiers of the tasks in the execution queue, and the identifiers are arranged from "head" to "tail" in the execution sequence of the tasks in an arrow direction. A lower part of the task graph 0 represents that an executor corresponding to each execution queue provides an interface between the task scheduler and each hardware accelerator, and delivers an execution instruction to the corresponding hardware accelerator in the execution sequence of the tasks in the execution queue.

In the foregoing implementation of this application, the task scheduler first obtains the target task (for example, obtains the target task from the memory), and obtains a dependency relationship between the target task and an associated task. When it is determined, based on the dependency relationship, that the first associated task (for example, a prerequisite for executing the target task is that the task 1, the task 2 and the like are all successfully executed) in the associated task has been successfully executed, it indicates that the target task meets the execution condition. In this case, the task scheduler schedules the hardware accelerator (may be one or more) related to execution of the target task to execute the target task. In this embodiment of this application, a task scheduler is connected between a CPU and each hardware accelerator. The task scheduler is configured to schedule, through hardware scheduling and based on the dependency relationship between the tasks, the HAC to execute each task. Delivery of each task is performed through direct hardware access. This shortens delay of task delivery, and indirectly improves processing performance of a system.

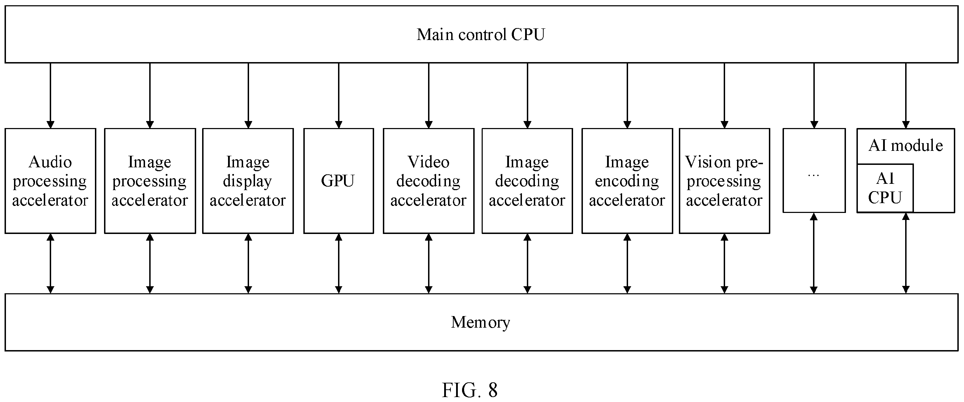

The following illustrates the foregoing method for scheduling the hardware accelerator by using an example in which the control system is a control system in an MDC scenario. In the MDC scenario, locations of hardware accelerators (only some hardware accelerators are shown, for example, a video decoding accelerator, a vision pre-processing accelerator, an image decoding accelerator, an image encoding accelerator, and an AI module) in a current control system are shown in FIG. 8. A main control CPU schedules each hardware accelerator to execute the corresponding task. Audio, an image, or a video may be input from an external sensor or a PCIe interface and transmitted to the memory for storage. Alternatively, after the audio, image, or video is processed by the hardware accelerator, such as an image decoding (JPEG Decoding, JPEGD) accelerator or a video decoding (Video Decoding, VEDC) accelerator, vision pre-processing is performed by a vision pre-processing (Vision Pre-Processing, VPC) accelerator and then sent to the AI module for further processing. In the MDC scenario, one scheduled task is a specific implementation process in which a data flow (which may be referred to as raw data) obtained by a terminal device (for example, a vehicle) by using a sensor (for example, a camera) is processed by a series of related hardware accelerators to obtain output data (for example, data used to sense an obstacle and data used to be sent to another device) with a specified function. In some implementations of this application, one scheduled task may be specifically divided into a front-end task and a back-end task. The front-end task is mainly responsible for data input, and mainly includes a plurality of tasks, for example, data processing such as collection, image processing, cropping, reassembling, and size adjustment of a multi-sensor source (an image, a video, and the like) information flow, and data storage and data transfer in the process. The hardware accelerators for processing different tasks need to be scheduled to work together. The back-end task is mainly responsible for computing data obtained by the processed front-end task. That is, after the data processed by the front-end task is obtained, an AI CPU of the AI module is notified to perform subsequent tasks such as data computing, analysis, training, prediction, and adjustment. It should be noted that, in some other implementations of this application, one scheduled task may include only a front-end task. For example, after the task scheduler invokes each hardware accelerator to perform processing such as image processing, cropping, reassembling, and size adjustment on input data, the processed data is sent to another terminal device (for example, a mobile phone or a personal computer), and the another terminal device performs AI computing and then returns a computation result to the terminal device.

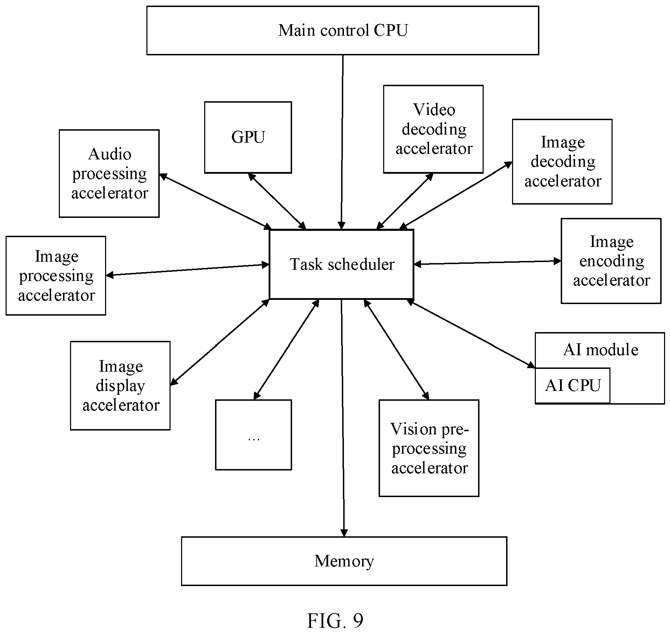

FIG. 9 shows a location of the task scheduler in the control system in the MDC scenario. The task scheduler provides an interface to each hardware accelerator, so as to schedule each hardware accelerator, for example, the video decoding accelerator, the vision pre-processing accelerator, the image decoding accelerator, or the image encoding accelerator in FIG. 9. In the MDC scenario, a task flow (which may also be referred to as a task set) of one scheduled task is divided into a plurality of tasks, and parallel or serial processing is performed by a plurality of hardware accelerators. The method for scheduling the hardware accelerator in this embodiment of this application is used to improve processing performance of the scheduled task. After the tasks in the task set are executed, the task scheduler stores data (for example, stores the data in the memory) generated after the tasks are executed. The tasks in the task set form one scheduled task. An original scheduled task is completed only after all the tasks in the task set are executed. According to the foregoing scheduling method, a target task in one scheduled task may be specifically that the task scheduler instructs the AI module (for example, the AI CPU) to perform AI computing, so as to obtain feedback data after computing of the AI module. The feedback data may be used to guide an operation of a user on a vehicle. Specifically, in some application scenarios, the feedback data may be data used to sense a lane line and/or a stop line, and is used to guide a vehicle owner to drive in a specified lane or stop in a specified parking area. Alternatively, the feedback data may be data used to sense a safety area, and is used to guide the vehicle owner to keep this vehicle at a safe distance from another vehicle. Alternatively, the feedback data may be data used to sense an obstacle (for example, a distance from the obstacle), and is used to guide the vehicle owner to take safety measures (for example, stop or turn) in advance. A type and a function of the feedback data are not limited herein. Corresponding feedback data may be obtained based on an actual application scenario. Therefore, the vehicle owner is guided to operate the vehicle based on the corresponding feedback data, thereby improving driving safety and driving performance.

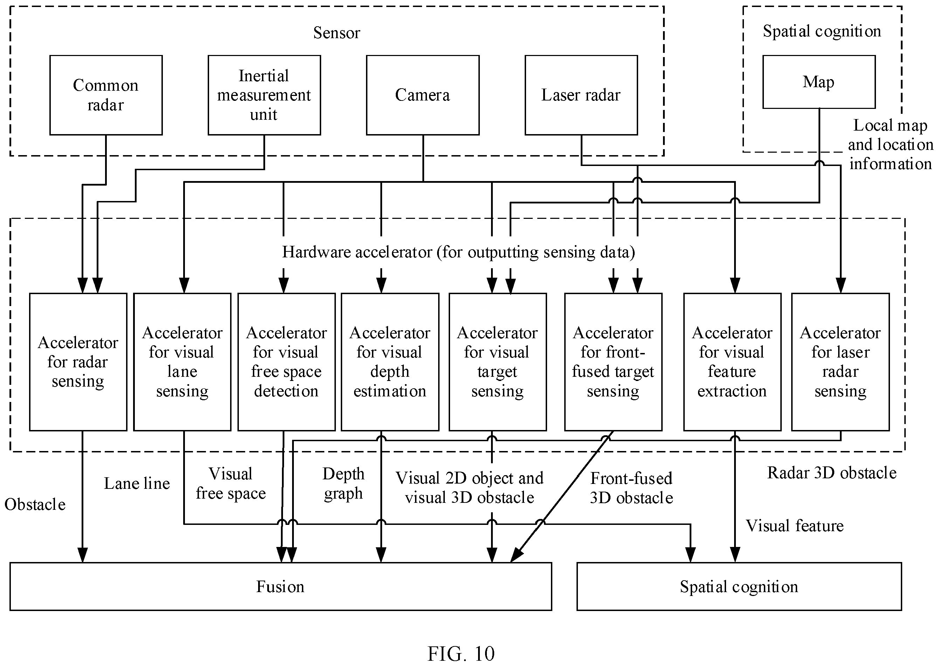

To better understand the scheduled task, the following provides description with reference to an application scenario of a MAC. Refer to FIG. 10. Various sensors (such as a common radar, a camera, a laser radar, and an inertial measurement unit) installed on the vehicle first obtain various sensor data. In addition, a map is used to obtain a location message or obtain a local map. The data may be referred to as raw data. Then, the raw data is allocated by the task scheduler to the corresponding hardware accelerator for processing, to obtain processed data (that is, sensing data in FIG. 10). Specific purposes of obtained sensing data vary based on different hardware accelerators. For example, sensing data output after an accelerator (which may be one or more) for radar sensing processes raw data may be used to sense an obstacle, and sensing data output after an accelerator (which may be one or more) for visual lane sensing processes raw data may be used to sense a lane line. Each process from the raw data to the sensing data obtained by scheduling each hardware accelerator by the task scheduler is a specific execution process of a scheduled task. Finally, data that can be intuitively read by the user (for example, a simulated lane line or a simulated safety area displayed on a display interface) is obtained through fusion or spatial cognition of each piece of sensing data.

It should be noted that, in some implementations of this application, data that forms each task in the task set may be obtained by the vehicle by using an installed sensor device (for example, a camera).

It should be further noted that, in some implementations of this application, a dependency relationship between the divided tasks in one scheduled task may be represented by using the two-dimensional chart in FIG. 7. The two-dimensional chart may be stored in the memory.

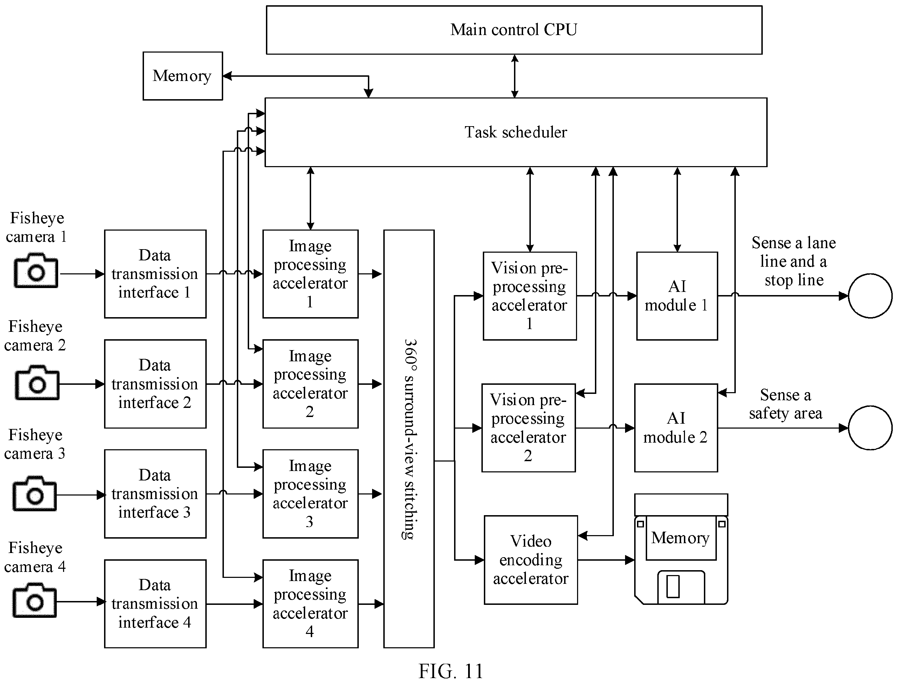

The following describes an actual scenario to which the method described in this embodiment of this application is applied. FIG. 11 shows a typical data flow graph of a surround-view stitching and image sensing part. A line of a one-way arrow indicates a flow direction of a data flow. A line of a bidirectional arrow indicates that there is an interface between the task scheduler and each hardware accelerator. The task scheduler may schedule each hardware accelerator through these interfaces. As shown in FIG. 11, the task scheduler may schedule any one of the image processing accelerators 1 to 4, the vision pre-processing accelerators 1 to 3, and the AI modules 1 to 2. Four fisheye cameras which are respectively installed in the front, rear, left, and right of the vehicle are first configured to collect image data. The task scheduler schedules the image processing accelerators 1 to 4 to perform image processing on the image data of corresponding branches and then perform image distortion correction and surround-view stitching on four channels of image data to output one channel of panorama. The panorama is output to three locations (that is, three task sets are formed). A first channel (that is, the first task set) is sent to the vision pre-processing accelerator 1 to obtain processed data, and then the processed data is output to the AI module 1 for computing. The computed feedback data is used to sense the lane line and the stop line. Similarly, a second channel (that is, the second task set) is sent to another vision pre-processing accelerator 2 to obtain processed data, and then the processed data is output to another AI module 2 for computing. The computed feedback data is used to sense a safety area in which the vehicle travels. A third channel (that is, the third task set) is directly sent to the video encoding accelerator for image encoding, compression, and storage. Each task included in each task set may be processed according to the foregoing scheduling method. For details, refer to the method in this embodiment corresponding to FIG. 3. Details are not described herein again.

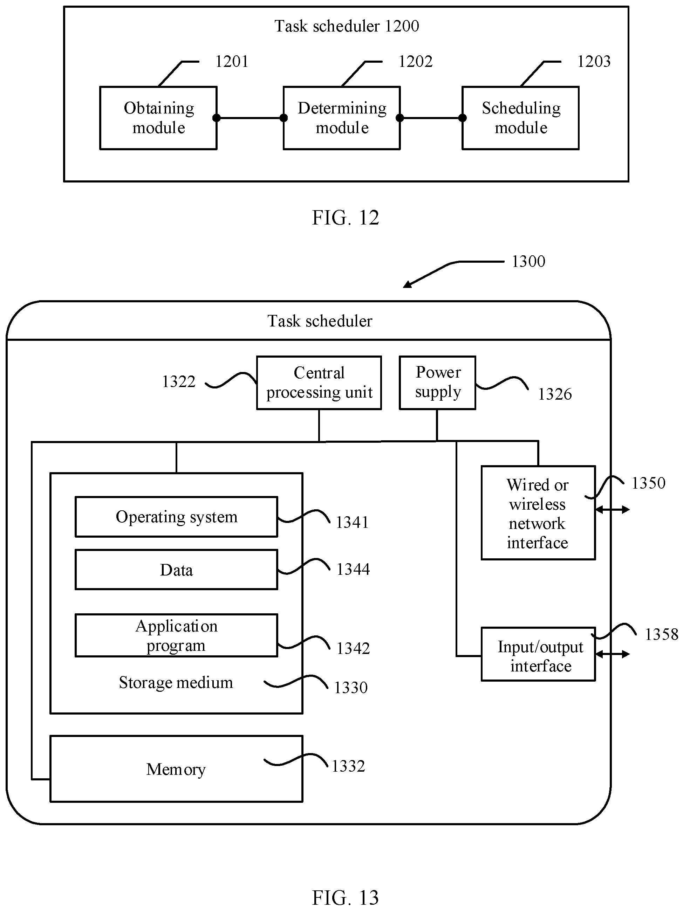

According to the embodiment corresponding to FIG. 3, to better describe the foregoing solutions for implementing this embodiment of this application, the following provides a task scheduler configured to implement the foregoing solutions. For details, FIG. 12 is a schematic diagram of a structure of a task scheduler according to an embodiment of this application. A task scheduler 1200 includes an obtaining module 1201, a determining module 1202, and a scheduling module 1203. The obtaining module 1201 is configured to obtain a target task. The determining module 1202 is configured to determine, based on a dependency relationship, a first associated task associated with the target task. The dependency relationship indicates an execution sequence of tasks in a task set. The scheduling module 1203 is configured to schedule, when the determining module 1202 determines that the first associated task has been executed, at least one hardware accelerator to execute the target task.

In a possible design, when the scheduling module 1203 schedules the at least one hardware accelerator to execute the target task, the at least one hardware accelerator executes the target task in sequence.

In a possible design, each of the at least one hardware accelerator corresponds to an execution queue. An identifier of the target task is stored in the execution queue corresponding to each hardware accelerator.

In a possible design, the scheduling module 1203 is further configured to: after the scheduling module 1203 schedules the at least one hardware accelerator to execute the target task, receive an indication message returned by the at least one hardware accelerator, where the indication message indicates that the at least one hardware accelerator has executed the target task, and delete the identifier of the target task from an execution queue corresponding to the at least one hardware accelerator.

In a possible design, the scheduling module 1203 is further configured to: store data obtained after each task in the task set is executed. All tasks in the task set form a scheduled task.

In a possible design, data that forms the tasks in the task set is obtained by a terminal device by using a camera device installed on the terminal device.

In a possible design, data obtained after each task in the task set is executed includes feedback data computed by an AI module. The feedback data is used to guide an operation on the terminal device. The AI module belongs to the at least one hardware accelerator.

In a possible design, the terminal device is a vehicle. The feedback data includes data used to sense a lane line and/or a stop line, or data used to sense a safety area, or data used to sense an obstacle. A type and a function of the feedback data are not limited herein. Corresponding feedback data may be obtained based on an actual application scenario. Therefore, a vehicle owner is guided to operate the vehicle based on the corresponding feedback data, thereby improving driving safety and driving performance.

It should be noted that content such as information exchange and an execution process between modules/units in the task scheduler 1200 is based on a same concept as the method embodiment corresponding to FIG. 3 in this application. For the specific content, refer to the descriptions in the foregoing method embodiment of this application. Details are not described herein again.

An embodiment of this application further provides a task scheduler. FIG. 13 is a schematic diagram of a structure of a task scheduler according to an embodiment of this application. For ease of description, only a part related to this embodiment of this application is shown. For specific technical details that are not disclosed, refer to a method part in embodiments of this application. A module of the task scheduler described in the embodiment corresponding to FIG. 12 may be deployed on a task scheduler 1300, and is configured to implement a function of the task scheduler in the embodiment corresponding to FIG. 12. Specifically, the task scheduler 1300 is implemented by one or more servers. The task scheduler 1300 may vary greatly due to different configurations or performance, and may include one or more central processing units (central processing units, CPUs) 1322 (for example, one or more processors), a memory 1332, and one or more storage media 1330 (for example, one or more mass storage devices) that store an application program 1342 or data 1344. The memory 1332 and the storage medium 1330 may be transient storage or persistent storage. A program stored in the storage medium 1330 may include one or more modules (not shown in the figure), and each module may include a series of instruction operations for a hardware accelerator. Further, the central processing unit 1322 may be configured to communicate with the storage medium 1330, and perform, on the task scheduler 1300, a series of instruction operations in the storage medium 1330. For example, the central processing unit 1322 may be configured to obtain a target task, and determine, based on a dependency relationship, a first associated task associated with the target task. The dependency relationship indicates an execution sequence of tasks in a task set. When determining that the first associated task has been executed, the central processing unit 1322 schedules at least one hardware accelerator to execute the target task.

The task scheduler 1300 may further include one or more power supplies 1326, one or more wired or wireless network interfaces 1350, one or more input/output interfaces 1358, and/or one or more operating systems 1341, such as Windows ServerTM, Mac OS XTM, UnixTM, LinuxTM and FreeBSDTM.

In this embodiment of this application, the steps performed by the task scheduler in the embodiment corresponding to FIG. 3 may be implemented based on the structure shown in FIG. 13. Details are not described herein again.

In addition, it should be noted that the described apparatus embodiments are merely examples. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by software, hardware, firmware, or any combination thereof. When the software is used to implement embodiments, all or a part of the embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A method for scheduling a hardware accelerator, comprising:
obtaining, by a task scheduler, a target task;
determining, by the task scheduler based on a dependency relationship, a first associated task associated with the target task, wherein the dependency relationship indicates an execution sequence of tasks in a task set, and the target task is a task in the task set; and
when the task scheduler determines that the first associated task has been executed, scheduling, by the task scheduler, at least one hardware accelerator to execute the target task.

2. The method according to claim 1, wherein when the task scheduler schedules the at least one hardware accelerator to execute the target task, the at least one hardware accelerator executes the target task in sequence.

3. The method according to either of claims 1 and 2, wherein each of the at least one hardware accelerator corresponds to an execution queue, and an identifier of the target task is stored in the execution queue corresponding to each hardware accelerator.

4. The method according to claim 3, wherein after the task scheduler schedules the at least one hardware accelerator to execute the target task, the method further comprises:
receiving, by the task scheduler, an indication message returned by the at least one hardware accelerator, wherein the indication message indicates that the at least one hardware accelerator has executed the target task; and
deleting, by the task scheduler, the identifier of the target task from an execution queue corresponding to the at least one hardware accelerator.

5. The method according to any one of claims 1 to 4, wherein the method further comprises:
storing, by the task scheduler, data obtained after each task in the task set is executed, wherein all tasks in the task set form a scheduled task.

6. The method according to claim 5, wherein data that forms the tasks in the task set is obtained by a terminal device by using a camera device installed on the terminal device.

7. The method according to either of claims 5 and 6, wherein the data obtained after each task in the task set is executed comprises:
feedback data calculated by an AI module, wherein the feedback data is used to guide an operation on the terminal device, and the AI module belongs to the at least one hardware accelerator.

8. The method according to claim 7, wherein the terminal device is a vehicle, and the feedback data comprises:
data used to sense a lane line and/or a stop line; or
data used to sense a safety area; or
data used to sense an obstacle.

9. A task scheduler, comprising:
an obtaining module, configured to obtain a target task;
a determining module, configured to determine, based on a dependency relationship, a first associated task associated with the target task, wherein the dependency relationship indicates an execution sequence of tasks in a task set, and the target task is a task in the task set; and
a scheduling module, configured to: when the determining module determines that the first associated task has been executed, schedule at least one hardware accelerator to execute the target task.

10. The scheduler according to claim 9, wherein when the scheduling module schedules the at least one hardware accelerator to execute the target task, the at least one hardware accelerator executes the target task in sequence.

11. The scheduler according to either of claims 9 and 10, wherein each of the at least one hardware accelerator corresponds to an execution queue, and an identifier of the target task is stored in the execution queue corresponding to each hardware accelerator.

12. The scheduler according to claim 11, wherein the scheduling module is further configured to:
after the scheduling module schedules the at least one hardware accelerator to execute the target task, receive an indication message returned by the at least one hardware accelerator, wherein the indication message indicates that the at least one hardware accelerator has executed the target task; and
delete the identifier of the target task from an execution queue corresponding to the at least one hardware accelerator.

13. The scheduler according to any one of claims 9 to 12, wherein the scheduling module is further configured to:
store data obtained after each task in the task set is executed, wherein all tasks in the task set form a scheduled task.

14. The scheduler according to claim 13, wherein data that forms the tasks in the task set is obtained by a terminal device by using a camera device installed on the terminal device.

15. The scheduler according to either of claims 13 and 14, wherein the data obtained after each task in the task set is executed comprises:
feedback data calculated by an AI module, wherein the feedback data is used to guide an operation on the terminal device, and the AI module belongs to the at least one hardware accelerator.

16. The scheduler according to claim 15, wherein the terminal device is a vehicle, and the feedback data comprises:
data used to sense a lane line and/or a stop line; or
data used to sense a safety area; or
data used to sense an obstacle.

17. A control system, comprising:
a task scheduler, configured to obtain a target task, and determine, based on a dependency relationship, a first associated task associated with the target task, wherein the dependency relationship indicates an execution sequence of tasks in a task set, and the target task is a task in the task set; and when it is determined that the first associated task has been executed, schedule at least one hardware accelerator to execute the target task; and
the at least one hardware accelerator, configured to execute the target task.

18. The system according to claim 17, wherein the task scheduler comprises at least one execution queue, and an identifier of the target task is stored in each execution queue; and
the at least one hardware accelerator is configured to execute the target task by using the identifier that is of the target task and that is stored in the at least one execution queue, wherein each hardware accelerator corresponds to one execution queue.

19. The system according to either of claims 17 and 18, wherein the task scheduler is further configured to:
store data obtained after each task in the task set is executed, wherein all tasks in the task set form a scheduled task.

20. The system according to claim 19, wherein the data that forms the tasks in the task set is obtained by a terminal device by using a camera device installed on the terminal device.

21. The system according to either of claims 19 and 20, wherein the data obtained after each task in the task set is executed comprises:
feedback data calculated by an AI module, wherein the feedback data is used to guide an operation on the terminal device, and the AI module belongs to the at least one hardware accelerator.

22. A task scheduler, comprising a processor and a memory, wherein the processor is coupled to the memory;
the memory is configured to store a program; and
the processor is configured to execute the program in the memory, so that the task scheduler performs the method according to any one of claims 1 to 8.

23. A computer-readable storage medium, comprising a program, wherein when the program runs on a computer, the computer is enabled to perform the method according to any one of claims 1 to 8.

24. A computer program product comprising instructions, wherein when the computer program product runs on a computer, the computer is enabled to perform the method according to any one of claims 1 to 8.
